# EUROPÄISCHE PATENTSCHRIFT

(11) **EP 0 808 736 B1**
(45) Veröffentlichungstag und Bekanntmachung des Hinweises auf die Patenterteilung: **30.08.2000**
(21) Anmeldenummer: 97104759.2
(22) Anmeldetag: 20.03.1997
(51) Int. Cl.: B60K 37/00, B60H 1/00

(54) **Instrumententafel für ein Kraftfahrzeug**
Dashboard for a motor vehicle
Tableau de bord pour véhicule à moteur

(30) Priorität: 24.05.1996 DE 19620919
(43) Veröffentlichungstag der Anmeldung: 26.11.1997
(73) Patentinhaber: Behr GmbH & Co., 70469 Stuttgart (DE)
(72) Erfinder: Beck, Oliver, 71067 Sindelfingen (DE); Damsohn, Herbert, Dr., 73773 Aichwald-Aichelberg (DE); Flik, Markus, Dr., 70193 Stuttgart (DE); Förster, Michael, 70439 Stuttgart (DE); Wolf, Walter, 71570 Oppenweiler-Zell (DE)
(74) Vertreter: Heumann, Christian

(56) Entgegenhaltungen:
- EP-A- 0 704 329
- EP-B- 0 185 856
- WO-A-97/22510
- DE-A- 2 813 909
- DE-A- 3 310 886
- DE-A- 4 423 108
- FR-A- 2 623 776

## Beschreibung

Die Erfindung betrifft eine Instrumententafel für ein Kraftfahrzeug nach dem Oberbegriff des Patentanspruchs 1.

Aus der EP 0 185 856 B1 ist eine Instrumententafel für ein Kraftfahrzeug mit zwei Bauteilen bekannt, die jeweils angeformte Wände aufweisen zur Aufnahme von Komponenten einer Klima- oder Heizungsanlage. Nachteilig an dieser bekannten Instrumententafel ist, daß zur Aufnahme einer Klima- oder Heizungsanlage ein entsprechendes Klimaanlage-Gehäuse bzw. Heizungs-Gehäuse erforderlich ist, welches an einem Bauteil angeformt ist. Die zur Ausbildung dieser Gehäuse erforderlichen Wände sind relativ dünn ausgebildet und erfordern einen hohen Montageaufwand.

Aus der EP 0 704 329 A1 ist eine andere Instrumententafel für ein Kraftfahrzeug bestehend aus zwei Bauteilen, bekannt mit einem Unterteil, das als Gehäuse einer Klimaanlage ausgebildet ist und in das Komponenten, wie Heizkörper und Verdampfer, der Klimaanlage eingesetzt sind. Auf das Unterteil ist ein aus einem weichgeschäumten Kunstoff bestehendes Oberteil aufgesetzt, wobei zwischen Ober- und Unterteil Luftkanäle gebildet sind und weitere Komponenten in korrespondierende Ausnehmungen von Ober- und Unterteil angeordnet sind.

Weiter ist aus der DE 44 23 108 A1 eine Instrumententafel bekannt, die aus zwei Teilen besteht, die zwischen sich Luftkanäle bilden und aus geschäumten Polypropylen bestehen.

Der Erfindung liegt die Aufgabe zugrunde, eine Instrumententafel derart auszubilden, daß auf einfache Weise eine Klima- oder Heizungsanlage in die Instrumententafel integrierbar ist, wobei eine ausreichende Biegesteifigkeit der Instrumententafel gewährleistet ist. Zur Lösung der Aufgabe weist die Erfindung die Merkmale des Anspruchs 1 auf.

Die mit der Erfindung erzielten Vorteile bestehen insbesondere darin, daß durch die Ausbildung der Bauteile als wandstarke Bauteile der nicht genutzte Innenraum der Instrumententafel fast vollständig ausgefüllt ist. Dies verleiht der Instrumententafel eine erhöhe Biegesteifigkeit in Quer- und Längsrichtung. Gleichzeitig wird durch die Ausbildung der Instrumententafel als massiver Block die Ausbreitung des Körper- und Luftschalls wirksam verringert. Dadurch, daß die Luftkanäle dicke Wandungen aufweisen, wird bereits am Entstehungsort des Schalls eine Schall- bzw. Körperschalldämpfung erzielt. Weiterhin tritt eine Verringerung der erforderlichen Komponentenzahl einer in diese Instrumententafel einzusetzende Klima- oder Heizungsanlage dadurch ein, daß durch entsprechende Ausformung der Bauteile rohrförmige Ausnehmungen gebildet werden, die als Luftkanäle dienen. Es sind daher keine zusätzlichen Luftschläuche, die in dafür vorgesehene Ausnehmungen eingesetzt werden, erforderlich. Weiterhin sind die Innenseiten mindestens eines Bauteils derart ausgeformt, daß auf einfache Weise die Komponenten einer Klima- oder Heizungsanlage, beispielsweise ein Heizkörper oder ein Verdampfer, gehalten sind, ohne daß zusätzliche Bauteile, wie beispielsweise ein Gehäusebauteil der Heizungs- oder Klimaanlage, erforderlich ist. Auf diese Weise lassen sich die Komponenten auf einfache Weise positionsgenau einsetzen. Dadurch, daß die Bauteile als weichgeschäumte Formteile ausgebildet sind, kann eine beliebige Form bzw. ein beliebiger Querschnitt der Luftkanäle erzielt werden. Durch Vorsehen mehrerer Bauteile ist es möglich, mehrere übereinander angeordnete Luftkanäle, die in verschiedene Richtungen laufen, auszubilden. Vorteilhafterweise kann somit die Instrumententafel platzsparender ausgebildet sein.

Nach einer Ausgestaltung der Erfindung bestehen die Bauteile aus einem expandierten Polypropylen (EPP) , wobei der Grad der mechanischen Festigkeit je nach Erfordernis beim Herstellungsprozeß der Bauteile festgelegt werden kann. Weiterhin ermöglicht dieser Werkstoff die Recyclefähigkeit der Bauteile, so daß eine Rückführung des Werkstoffs in den Produktionsprozeß gewährleistet ist.

Nach einer Weiterbildung der Erfindung befindet sich das Gebläse einer Heizungs- oder Klimaanlage innerhalb der Instrumententafel auf der Beifahrerseite und die weiteren Komponenten wie z.B. der Heizkörper und der Verdampfer in einem mittleren Bereich der Instrumententafel in Verlängerung der Mittelkonsole. Auf diese Weise kann ein üblicherweise nicht genutzer Raum innerhalb der Instrumententafel zur Aufnahme der Komponenten genutzt werden, wobei Platz im Fußraum unterhalb der Instrumententafel geschaffen wird.

Weitere Vorteile der Erfindung ergeben sich aus den weiteren Unteransprüchen.

Ein Ausführungsbeispiel der Erfindung wird nachfolgend anhand der Zeichnungen näher erläutert:

Es zeigen:
- **Fig. 1**: Eine perspektivische Darstellung einer eingebauten Instrumententafel, die auf der Beifahrerseite aufgeschnitten ist;
- **Fig. 2**: einen Querschnitt durch die Instrumententafel entlang der Linie II-II gemäß Fig. 1;
- **Fig. 3**: einen Querschnitt durch die Instrumententafel entlang der Linie III-III, gemäß Fig. 1,
- **Fig. 4**: einen Querschnitt durch die Instrumententafel entlang der Linie IV-IV, gemäß Fig. 1,

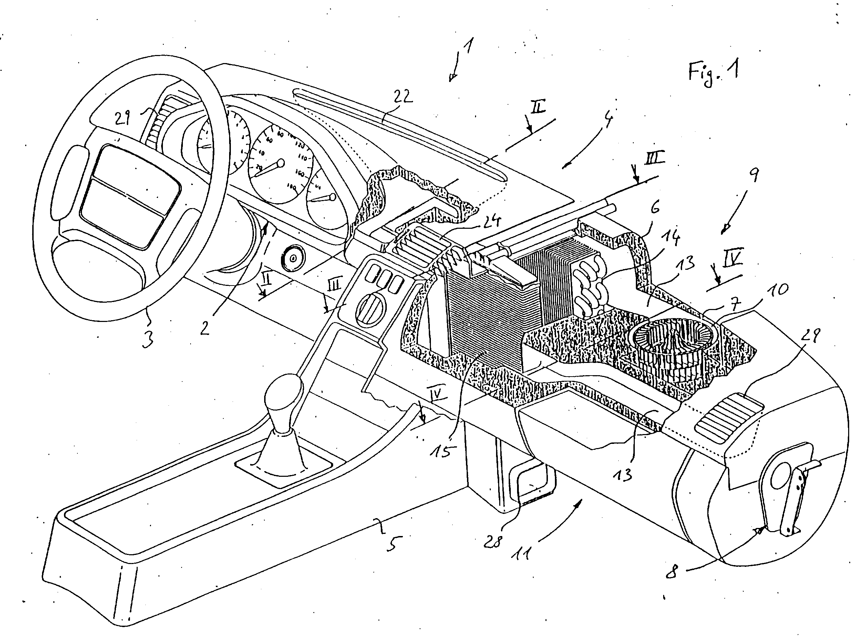

In **Fig. 1** ist eine Instrumententafel 1 in einem zusammengesetzten Zustand dargestellt, wobei es Ausnehmungen aufweist zur Aufnahme eines Cockpits 2 und zur Aufnahme einer mit einem Lenkrad 3 in Verbindung stehenden Lenkradsäule. In einem mittleren Bereich 4 der Instrumententafel 1 ist dasselbe mit einer Mittelkonsole 5 verbunden.

Die Instrumententafel 1 weist im wesentlichen zwei Bauteile auf, nämlich ein oberes Bauteil 6 und ein unteres Bauteil 7, die sich jeweils von einer nicht dargestellten ersten seitlichen Karrosserieinnenwand zu einer gegenüberliegenden zweiten Karrosserieinnenwand erstrecken. Mit dieser sind sie über ein Verbindungselement 8 kraftschlüssig verbunden.

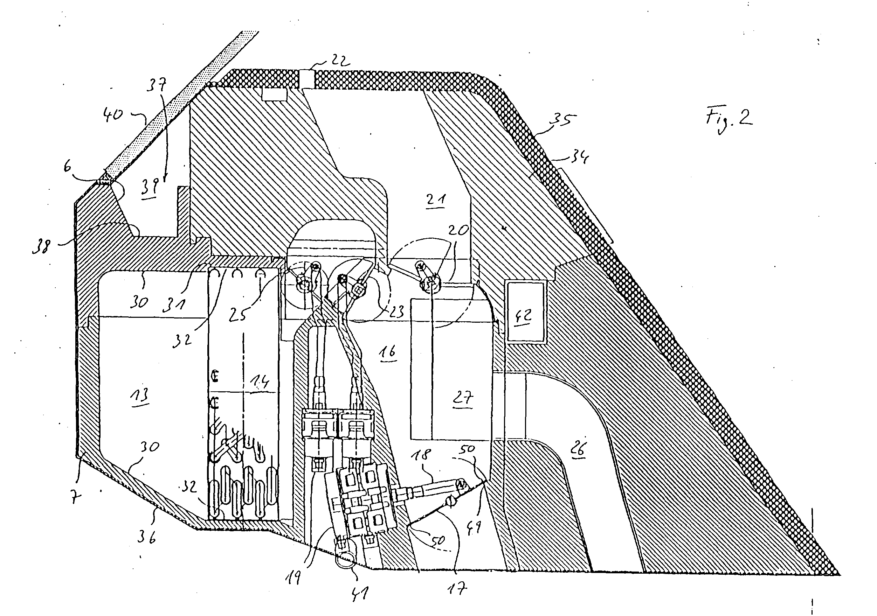

Wie besonders gut aus **Fig. 1** zu ersehen ist, ist in der Instrumententafel 1 eine Klimaanlage 9 untergebracht. Die Bauteile 6, 7 weisen jeweils Vertiefungen auf, in die die Komponenten der Klimaanlage 9 eingesetzt und form- und kraftschlüssig gehalten sind, vorzugsweise durch Preßsitz. Wie **Fig. 1** zeigt, ist ein Gebläse 10 auf einer Beifahrerseite 11 angeordnet, das in Abhängigkeit von der Stellung der nicht dargestellten Umluft- und Frischluftklappe Frischluft und/oder Umluft aus dem Fahrzeuginnenraum durch einen Umluftstutzen 12 ansaugt. Alternativ kann das Gebläse 10 auch in dem mittleren Bereich 4 angeordnet sein, so daß die Heizungs- oder Klimaanlage im wesentlichen symmetrisch in der Instrumententafel 1 angeordnet ist. Über einen Luftkanal 13 wird die angesaugte Luft einem Verdampfer 14 zugeführt, in diesem abgekühlt und dann einem Heizkörper 15 zugeleitet. Nach dem Ausströmen der Luft aus dem Heizkörper 15 gelangt die temperierte Luft in einen Luftverteilungsraum 16, in dem die Luft zu den verschiedenen Düsen verteilt wird. Wie aus **Fig. 2** zu ersehen ist, ist zur Steuerung des Luftstroms in Richtung des Fußraums im Luftverteilungsraum 16 eine Fußraumsteuerklappe 17 vorgesehen, die über einen Hebelmechanismus 18 mit einem Stellelement 19 verbunden ist. Dieses Stellelement 19 ist als Unterdruckdose ausgebildet. Alternativ kann die Fußraumsteuerklappe 17 auch durch einen Elektromotor in ihrer Lage verstellt werden. Weitere Stellelemente 19 sind vorgesehen, um eine Defrosterklappe 20 und somit die Luftmenge durch einen Defrosterluftkanal 21 zu den außenseitig angeordneten Defrosterdüsen 22 zu steuern. Eine Mitteldüsenklappe 23 dient zur Einstellung der Luftmenge, die über einen nicht dargestellten Luftkanal zu einer Mitteldüse 24 geleitet wird. Eine Mischklappe 25 ist im Bereich des Verdampfers 14 angeordnet und ermöglicht, die durch den Verdampfer 14 gekühlte Luft über einen nicht dargestellten Bypaßkanal an dem Heizkörper 15 vorbei in den Luftverteilungsraum 16 zu leiten. Weiterhin zweigt von dem Luftverteilungsraum 16 ein Fondluftkanal 26 und ein Seitendüsenluftkanal 27 ab, die zu einem Fond-Auslaßstutzen bzw. zu seitlich angeordneten Seitendüsen 29 führen.

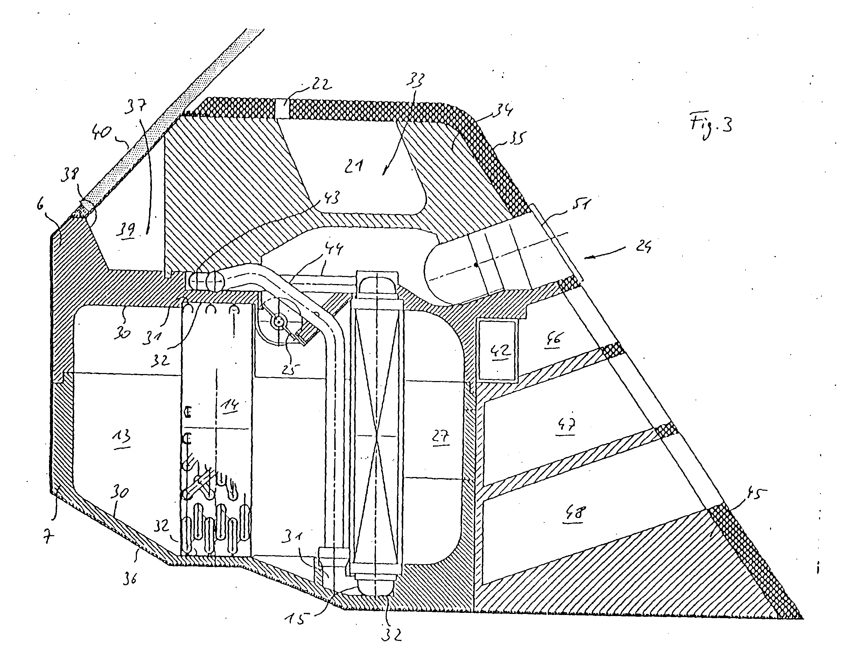

Wie sich aus den **Fig. 3** bis **4** ersehen läßt, werden die Komponenten der Klimaanlage im wesentlichen durch die zwei Bauteile 6 und 7 gehalten bzw. ausgebildet. Zur Aufnahme des Gebläses 10, des Verdampfers 14 sowie des Heizkörpers 15 weisen das obere Bauteil 6 und das untere Bauteil 7 jeweils an den Innenseiten 30 Vertiefungen 31 auf, in die die randseitigen Wandungen 32 der Komponenten eingesetzt und flächig an denselben anliegen. Die Bauteile 6 und 7 bestehen aus einem geschäumten Kunststoff mit einer solchen Dichte, daß ein gewisser Toleranzausgleich erfolgen kann und die Komponenten klemmend in den Vertiefungen 31 gehalten sind. Sie bestehen aus einem formstabilen, den Innenraum ausfüllenden Werkstoff. Ferner weisen die Bauteile 6 und 7 Ausnehmungen 33 auf zur Ausbildung der Luftkanäle 21, 26, 27. Zu diesem Zweck werden die Bauteile 6 und 7 als weichgeschäumte Formteile in entsprechend ausgebildeten Werkzeugen hergestellt. Vorzugsweise bestehen die Bauteile 6 und 7 aus einem expandierten Polypropylen-Schaumstoff, beispielsweise aus einem unter der Marke "Fawo-Cel" bekannten Schaumstoff des Herstellers Fagerdala World Foams. Darüber hinaus können sie auch aus einem PE-Schaum oder PU-Schaum bestehen.

Oberhalb des oberen Bauteils 6 ist ein Abdeckbauteil 34 angeordnet, das aus dem gleichen Material besteht. Da dem Abdeckbauteil 34 weniger eine tragende Funktion als mehr eine Füllfunktion zukommt, besteht das Abdeckbauteil 34 aus einem geschäumten Kunststoff geringerer Dichte, so daß bei einem etwaigen Unfall von ihm eine schlagdämpfende Wirkung ausgeht. Die Verletzungsgefahr des Beifahrers kann somit verringert werden.

Fahrzeuginnenseitig sind die Bauteile 6 und 34 mit einer Außenhaut 35 verbunden, die flächig auf den Außenseiten der Bauteile 6 und 34 aufgebracht und mechanisch oder durch Verklebung mit denselben verbunden ist. Die Außenhaut 35 kann aus mehreren Schichten desselben Kunststoffs unterschiedlicher Dichte sowie einem außenseitig aufgebrachten Überzug bestehen. Beispielsweise kann sie aus einer dünnen Kunststoffschicht höherer Dichte, einer darauf angeordneter Kunststoffschicht niedriger Dichte sowie einem nach Design-Aspekten ausgebildeten Überzug bestehen.

Motorraumseitig sind die Bauteile 6 und 7 klemmend von einer Spritzwand 36 umgeben. Die Bauteile 6 und 7 können an dieser Spritzwand 36 klemmend und/oder durch mechanische Verbindungsmittel oder durch Klebung verbunden sein. Zur Montage der Instrumententafel 1 ist es daher lediglich erforderlich, nachdem die entsprechend geformten Formteile als Bauteile 6, 7 und 34 vorliegen, die entsprechenden Komponenten, wie z.B. den Verdampfer 14, den Heizkörper 15 oder die Stellelemente 19, in die entsprechenden Vertiefungen 31 des unteren Bauteils 7 einzusetzen. Nachfolgend werden die weiteren Bauteile aufgesetzt, wobei die Bauteile durch den Preßsitz der eingesetzten Komponenten zusammengehalten werden. Zusätzlich können die zusammengesetzten Bauteile auch durch Klammerung derselben gehalten sein. Durch Aufbringen der Außenhaut und dem Befestigen der Bauteile 6, 7 an der Spritzwand 36 ist der Zusammenbau der Instrumententafel abgeschlossen. Neben der Haltewirkung für die Komponenten ermöglicht die massive Ausbildung der Bauteile zur Bildung der Instrumententafel und die daraus folgende luftdichte Umschließung der Komponenten durch den weichgeschäumten PP-Kunststoff eine thermische Isolierung der Komponenten. Insbesondere für das nicht dargestellte Expansionsventil ergeben sich dadurch Verbesserungen des Wirkungsgrades.

Wie aus **Fig. 2** und **3** zu ersehen ist, weist das obere Bauteil 6 an einer Oberseite 37 eine weitere Aussparung 38 auf zur Ausbildung eines Kabelkanals 39 unterhalb einer Windschutzscheibe 40. Dieser Kabelkanal 39 erstreckt sich bereichsweise längs der Instrumententafel 1 und führt die elektrischen Kabel, die sich vom Motorraum zu dem Cockpit 2 erstrecken. In Strömungsrichtung hinter dem Verdampfer 14 ist im unteren Bauteil 7 eine Öffnung 41 vorgesehen, durch die das anfallende Kondenswasser ablaufen kann.

In einem fahrzeuginnenseitig nahen Bereich ist zwischen dem unteren Bauteil 7 und dem Abdeckbauteil 34 ein Tragrohr 42 angeordnet, das sich im wesentlichen längs der Instrumententafel 1 erstreckt und im Bereich des Cockpits 2 Haltemittel aufweist zur Halterung des Cockpits 2 und im mittleren Bereich 4 Haltemittel aufweist zur Halterung der Heizungs- oder Klimaanlage.

Wie aus **Fig. 3** zu ersehen ist, weist das Abdeckbauteil 34 eine Ausnehmung 43 auf, so daß zu und von dem Heizkörper 15 kühlmittelführende Heizungsrohre 44 formschlüssig gehalten sind. In dem mittleren Bereich 4 schließt sich fahrzeuginnenseitig an den Bauteilen 6 und 7 ein vorderes Bauteil 45 an, das mehrere fächerartige Ausnehmungen 46, 47, 48 aufweist, wobei die obere Ausnehmung 46 zur Aufnahme eines Bedienteils der Klimaanlage, die mittlere Ausnehmung 47 zur Aufnahme eines Radiogerätes und die untere Ausnehmung 48 zur Aufnahme eines Kassettenabspielgerätes oder eines CD-Abspielgerätes dient.

Die Bauteile 6, 7 und 34 sind derart ausgeformt, daß die Luftkanäle 21, 26, 27, die zu den entsprechenden Düsen führen, entsprechend den Erfordernissen, die an die einzelnen Luftkanäle hinsichtlich Luftmenge und Vermeidung des Druckabfalls, ausgebildet sind. Darüber hinaus benötigen die Luftklappen 20, 23, 25 keine randseitigen Dichtungen, weil die Luftkanäle Absätze 49 aufweisen, an denen die randseitigen Enden 50 der Luftklappen in der Schließstellung zur Anlage kommen. In den Auslaßbereichen der Luftkanäle können die Düsen als Düseneinheit in die Öffnung eingesetzt werden. Wie in **Fig. 3** dargestellt, ist eine Mitteldüseneinheit 51 in die Öffnung des Mitteldüsenkanals 23 eingesetzt und ist mit den Bauteilen 6 und 34 vorzugsweise klemmend verbunden. Die Luftkanäle 21, 26, 27 weisen dicke Wandungen, die durch die entsprechenden Bauteile 6, 7, 34 gebildet werden, auf, so daß neben dem kompakten Aufbau der Instrumententafel 1 die Ausbreitung von Körperschall verringert wird.

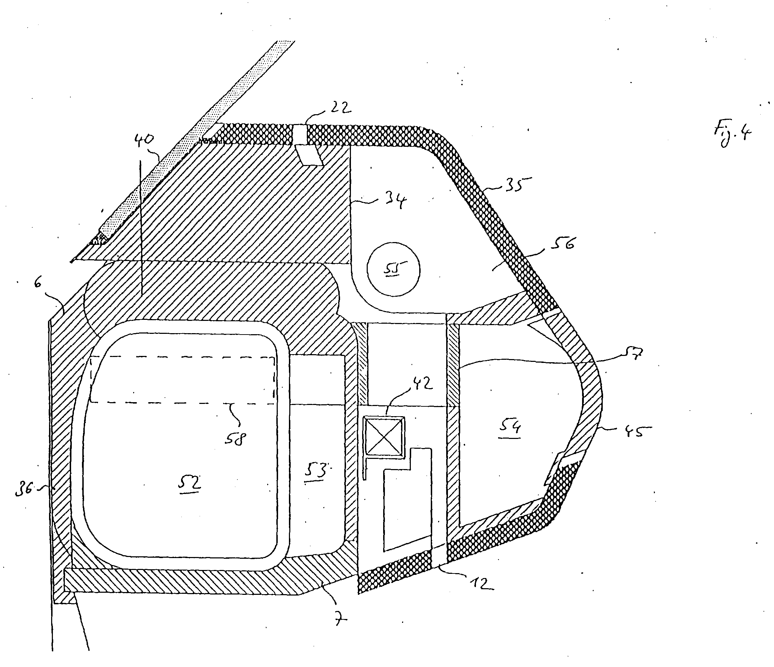

Wie in **Fig. 4** dargestellt ist, ist innerhalb des durch die Bauteile 6 und 7 gebildeten Hohlraums ein Aktivkohlefilter 52 klemmend gehalten. Dieser in Figur 1 nicht dargestellte Aktivkohlefilter 52 ist zwischen dem Gebläse 10 und dem Verdampfer 14 angeordnet und filtriert die in der Luft vorkommenden flüchtigen Stoffe. Der Aktivkohlefilter 52 ist innerhalb des Luftkanals 13 angeordnet. Eine nicht dargestellte Luftklappe, die vor dem Aktivkohlefilter 52 angeordnet ist, ermöglicht eine Vorbeiführung des Luftstroms um den Aktivkohlefilter 52 durch einen Bypaßkanal 53, so daß der Aktivkohlefilter 52 außer Betrieb ist. Damit der Aktivkohlefilter 52 ausgewechselt werden kann, ist das untere Bauteil 7 als abnehmbares Bauteil ausgebildet. Zu diesem Zweck kann das untere Bauteil 7 durch ein Scharnier mit dem oberen Bauteil 6 verbunden sein, so daß das untere Bauteil 7 entsprechend einer Klappe nach unten verschwenkt werden kann. Im vorderen Bereich der Instrumententafel 1 ist in diesem Bereich ferner ein Handschuhfach 54 und ein darüberliegender Airbag 55 angeordnet. Zu diesem Zweck weist das vordere Bauteil 54 eine Ausnehmung 56 zur Aufnahme des Airbags 55 auf. Das Handschuhfach 54 ist nach unten klappbar gehalten. In geöffneter Position des Handschuhfachs 54 ist ein Einsatzstück 57 nach vorne herausziehbar, so daß der Zugang frei wird zu einem in Luftströmungsrichtung vor dem Aktivkohlefilter 52 angeordneten Partikelfilter 58. Der Partikelfilter 58 kann nach Ablauf seiner Standzeit auf einfache Weise in waagerechter Richtung durch die Öffnung des Handschuhfachs 54 herausgezogen und durch einen neuen ersetzt werden.

## Patentansprüche

1. Instrumententafel für ein Kraftfahrzeug, bestehend aus mindestens zwei Bauteilen (6, 7, 34), die als Kunststoff-Formteile ausgebildet sind und Ausnehmungen zur Aufnahme von Komponenten (14, 15) und zur Ausbildung von Luftkanälen (13, 23, 26, 27) aufweisen, wobei die Komponenten (14, 15) nach dem Zusammensetzen der Bauteile lagefest gehalten sind und in welche die Ausnehmungen eingeformt sind zur formschlüssigen Aufnahme der Komponenten (10, 14, 15) und/oder zur Bildung von Luftkanälen (13, 23, 26, 27), wobei die Bauteile (6, 7, 34) aus einem weichgeschäumten Kunststoff bestehen und als massive, den Innenraum der Instrumententafel (1) im wesentlichen ausfüllende Bauteile ausgebildet sind und daß ein unteres Bauteil (7) und ein oberes Bauteil (6) vorgesehen sind mit Vertiefungen (31) zur Aufnahme von Komponenten (10, 14, 15) einer Heizungs- oder Klimaanlage und daß die Komponenten (10, 14, 15) durch Preßsitz in den Vertiefungen (31) gehalten sind.

2. Instrumententafel nach Anspruch 1, dadurch gekennzeichnet, daß die Bauteile (6, 7, 34) als weich geschäumte Formteile aus einem expandierten Polypropylen (EPP) ausgebildet sind.

3. Instrumententafel nach Anspruch 1 oder 2, dadurch gekennzeichnet, daß ein Verdampfer (14) und/oder ein Heizkörper (15) mit jeweils zwei gegenüberliegenden Stirnseiten in korrespondierende Vertiefungen (31) einsetzbar ist.

4. Instrumententafel nach einem oder mehreren der Ansprüche 1 bis 3, dadurch gekennzeichnet, daß ein Gebläse (10) als Komponente der Heizungs- oder Klimaanlage innerhalb der Instrumententafel (1) auf der Beifahrerseite und der Verdampfer (14) und der Heizkörper (15) als weitere Komponenten der Heizungs- oder Klimaanlage in einem mittleren Bereich (4) der Instrumententafel (1) angeordnet sind.

5. Instrumententafel nach einem oder mehreren der Ansprüche 1 bis 4, dadurch gekennzeichnet, daß die Bauteile (6, 7, 34) durch Klebung oder durch Verklammerung derselben miteinander verbunden sind.

6. Instrumententafel nach einem oder mehreren der Ansprüche 1 bis 5, dadurch gekennzeichnet, daß die Bauteile (6, 7, 34) fahrzeuginnenseitig mit einen dünnen Außenhaut (35) aus einem dekorierenden Leder oder aus einer Kunststoffolie beschichtet sind.

7. Instrumententafel nach einem oder mehreren der Ansprüche 1 bis 6, dadurch gekennzeichnet, daß ein weiteres Bauteil auf der Beifahrerseite als Abdeckbauteil (34) ausgebildet und oberhalb des oberen Bauteils (6) angeordnet ist, wobei das Abdeckbauteil (34) eine andere Dichte als die weiteren Bauteile (6, 7) aufweist.

## Claims

1. A dashboard for a motor vehicle, comprising at least two components (6, 7, 34), which are made as moulded synthetic components and have recesses for receiving components (14, 15) and for providing air passages (13, 23, 26, 27), the components (14, 15) being retained in a fixed position once the components have been assembled, and in which the recesses are moulded to provide a positive-fit for receiving the components (10, 14, 15) and/or for forming air passages (13, 23, 26, 27), the components (6, 7, 34) being made from a soft-foamed synthetic material and designed as solid components substantially filling the interior compartment of the dashboard (1), and a bottom component (7) and a top component (6) are provided having recesses (31) for receiving components (10, 14, 15) of a heating or air conditioning system and the components (10, 14, 15) are retained in the recesses (31) by a force fit.

2. A dashboard as claimed in claim 1, characterised in that the components (6, 7, 34) are soft, foam moulded components made from an expanded polypropylene (EPP).

3. A dashboard as claimed in claim 1 or claim 2, characterised in that an evaporator (14) and/or a heating element (15) having respectively two oppositely lying end faces can be inserted in matching recesses (31).

4. A dashboard as claimed in one or more of claims 1 to 3, characterised in that a fan (10), being a component of the heating and or air conditioning system, is arranged inside the dashboard (1) on the passenger side and the evaporator (14) and the heating element (15), being other components of the heating or air conditioning system, are arranged in a central region (4) of the dashboard (1).

5. A dashboard as claimed in one or more of claims 1 to 4, characterised in that the components (6, 7, 34) are joined to one another by means of adhesive or by the clamping thereof.

6. A dashboard as claimed in one or more of claims 1 to 5, characterised in that the components (6, 7, 34) on the vehicle interior side are covered with a thin outer skin (35) made from a decorative leather or a plastic film.

7. A dashboard as claimed in one or more of claims 1 to 6, characterised in that another component is provided on the passenger side as a cover component (34), being arranged above the top component (6), the cover component (34) being of a different density than the other components (6, 7).

## Revendications

1. Tableau de bord pour véhicule à moteur, constitué d'au moins deux éléments (6, 7, 34) qui sont conçus sous forme de pièces moulées en plastique et présentent des évidements pour recevoir des composants (14, 15) et former des canaux d'air (13, 23, 26, 27), dans le cas duquel les composants (14, 15) sont maintenus fixes en position après l'assemblage des éléments et dans lequel les évidements sont moulés en creux pour recevoir les composants (10, 14, 15) par complémentarité de forme et/ou former des canaux d'air (13, 23, 26, 27), dans le cas duquel les éléments (6, 7, 34) sont constitués d'un plastique en mousse douce et sont conçus sous forme d'éléments massifs, remplissant essentiellement l'espace intérieur du tableau de bord (1), et dans le cas duquel sont prévus un élément inférieur (7) et un élément supérieur (6) avec des évidements (31) pour recevoir des composants (10, 14, 15) d'une installation de chauffage ou de climatisation et dans le cas duquel les composants (10, 14, 15) sont maintenus dans les évidements (31) par ajustement serré.

2. Tableau de bord selon la revendication 1, caractérisé par le fait que les éléments (6, 7, 34) sont conçus sous forme de pièces moulées en mousse douce de polypropylène expansé (EPP).

3. Tableau de bord selon la revendication 1 ou 2, caractérisé par le fait qu'un évaporateur (14) et/ou un corps de chauffe (15) présentant chacun deux faces frontales opposées peuvent s'insérer dans des évidements correspondants (31).

4. Tableau de bord selon l'une ou plusieurs des revendications 1 à 3, caractérisé par le fait qu'un ventilateur (10), comme composant de l'installation de chauffage ou climatisation, est disposé à l'intérieur du tableau de bord (1), du côté du passager voisin du conducteur et que l'évaporateur (14) et le corps de chauffe (15), comme autre composants de l'installation de chauffage ou de climatisation, sont disposés dans une zone médiane (4) du tableau de bord (1).

5. Tableau de bord selon l'une ou plusieurs des revendications 1 à 4, caractérisé par le fait que les éléments (6, 7, 34) sont réunis l'un à l'autre par collage ou par agrafage des éléments.

6. Tableau de bord selon l'une ou plusieurs des revendications 1 à 5, caractérisé par le fait que les éléments (6, 7, 34) sont, du côté habitacle, revêtus d'une mince peau extérieure (35) en cuir décoratif ou en une feuille de plastique.

7. Tableau de bord selon l'une ou plusieurs des revendications 1 à 6, caractérisé par le fait qu'un autre élément est conçu, du côté du passager voisin du conducteur, sous forme d'un élément de recouvrement (34) et est disposé au-dessus de l'élément supérieur (6), l'élément de recouvrement (34) présentant une densité différente de celle des autres éléments (6, 7).
